# EUROPÄISCHE PATENTSCHRIFT

(11) **EP 1 567 781 B1**
(45) Veröffentlichungstag und Bekanntmachung des Hinweises auf die Patenterteilung: **12.12.2007**
(21) Anmeldenummer: 03757522.2
(22) Anmeldetag: 31.10.2003
(51) Int. Cl.: F16D 48/00

(54) **EINFACHWIRKENDER AKTUATOR MIT SCHNELLÖFFNENDEM HYDRAULIKVENTIL ZUR STEUERUNG EINER KUPPLUNG**
SIMPLE ACTION ACTUATOR WITH A HYDRAULIC FAST-OPENING VALVE FOR CONTROLLING A CLUTCH
ACTIONNEUR, A MODE D'ACTIONNEMENT SIMPLE, PRESENTANT UNE SOUPAPE HYDRAULIQUE A OUVERTURE RAPIDE ET SERVANT A COMMANDER UN ACCOUPLEMENT

(30) Priorität: 31.10.2002 AT 73502 U
(43) Veröffentlichungstag der Anmeldung: 31.08.2005
(73) Patentinhaber: Magna Drivetrain AG & Co KG, 8502 Lannach (AT)
(72) Erfinder: QUEHENBERGER, Johannes, A-5753 Saalbach (AT); GRATZER, Franz, A-8152 Stallhofen (AT); SCHMIDL, Dieter, A-8010 Graz (AT)
(74) Vertreter: Manitz, Finsterwald & Partner GbR
(86) Internationale Anmeldenummer: PCT/AT2003/000327
(87) Internationale Veröffentlichungsnummer: WO 2004/040158

(56) Entgegenhaltungen:
- EP-A- 0 348 270
- EP-A- 1 236 918
- US-A- 4 281 676
- PATENT ABSTRACTS OF JAPAN Bd. 0152, Nr. 98 (M-1141), 29. Juli 1991 (1991-07-29) & JP 3 107620 A (HINO MOTORS LTD), 8. Mai 1991 (1991-05-08)

## Beschreibung

Die Erfindung betrifft einen einfachwirkenden Aktuator für die Steuerung einer Reibungskupplung im Antriebsstrang eines Kraftfahrzeuges, mit einer den Anpressdruck der Kupplung erzeugenden Zylinder-Kolben-Einheit, wobei eine steuerbare Elektromotor-Pumpe-Einheit ein Druckmedium bereitstellt und über eine selbststeuernde Ventileinheit mit der Zylinder-Kolben-Einheit in Verbindung steht, sodass die Kupplung durch Ansteuern der Pumpe gesteuert ist. Dabei kann es sich sowohl um Kupplungen zum Sperren eines Differentiales als auch um Kupplungen zur Steuerung des einer Achse oder einem Rad zugewiesenen Drehmomentes handeln. Der Aktuator wirkt in Schließrichtung der Kupplung, in Öffnungsrichtung wirkt eine kupplungsinteme Kraft, etwa eine Feder.

Die Anforderungen an die Steuerbarkeit von Reibungskupplungen sind bei Anwendungen im Kraftfahrzeug sehr hoch, sowohl hinsichtlich der Genauigkeit der Einstellung eines bestimmten Drehmomentes als auch hinsichtlich der Geschwindigkeit der Steuerung. Letzteres besonders beim Lösen der Kupplung, etwa bei einem ABS- oder ESB-Eingriff. Dazu kommt noch die Forderung nach Eigensicherheit. Das bedeutet, dass sich bei Systemausfall der sicherste Zustand (meist ist das gelöste Kupplung) von selbst einstellen soll.

Nach dem allgemeinen Stand der Technik wird der für derartige Kupplungen erforderliche Anpressdruck entweder mechanisch oder hydraulisch aufgebracht. Im ersteren Fall finden beispielsweise Rampenringe Verwendung, für deren Verdrehen dann wohl eine elektrische Kraftquelle eingesetzt wird. Derartige Mechanismen sind, alleine schon wegen der großen Zahl an Teilen mit ihren Reibungen und Spielen, nachteilig.

Bei hydraulischer Betätigung mittels einer externen Pumpe ist die für die Zusammenarbeit mit einer Elektronik erforderliche Schaltgeschwindigkeit nur mit groß dimensionierter Elektromotor-Pumpe-Einheit zu erreichen, was sich aus Gründen von Gewicht und vor allem Stromverbrauch verbietet. Ausserdem ist ein Druckspeicher und ein angesteuertes Regelventil erforderlich. Wird statt dessen eine mit den Kupplungsteilen mitrotierende drehzahldifferenzabhängige Pumpe verwendet, so muss die Ansteuerung auf einen rotierenden Teil übertragen werden, was aufwendig und nachteilig ist. Es besteht auch das Problem, dass bei geringer Drehzahldifferenz der zum Steuern erforderliche Druck nicht zur Verfügung steht.

Dazu kommt noch, dass bei etwas längerem Betrieb mit einem bestimmten zu übertragenden Drehmoment der auf die Kupplung wirkende Druck des Druckmediums gehalten werden muss, was bei einer nicht steuerbaren Elektromotor-Pumpe-Einheit hohe Umlaufverluste bedeutet. Bei allen bekannten Systemen lässt sowohl Ausrückgeschwindigkeit als auch Eigensicherheit zu wünschen übrig.

Aus der EP 348 270 ist ein gattungsgemäßer Aktuator bekannt, bei dem die Steuerung mittels einer nicht reversierbaren Motor-Pumpe-Einheit erfolgt. Die selbststeuernde Ventileinheit enthält nebst einem Schnellablassventil einen Differentialschieber, der das Schnellablassventil nur bei ausreichender Durchströmgeschwindigkeit des von der Pumpe geförderten Fluids geschlossen hält. Der Energieverbrauch ist somit erheblich, wenn in der Zylinder-Kolben-Einheit der Druck gehalten werden soll.

Weiters ist in der nicht vorveröffentlichten EP 1 256 478 eine reversierbar steuerbare Pumpe und ein Schnellablassventil vorgeschlagen, das auf die Differenz zwischen dem von der Pumpe erzeugten und dem in der Zylinder-Kolben-Einheit herrschenden Druck anspricht. Um ein schnelles Öffnen der Kupplung zu ermöglichen, ist ein gedrosselter Nebenstrom erforderlich, der aber ein Halten des Druckes in der Zylinder-Kolben-Einheit mit geringer bis gar keiner Förderung unmöglich macht.

Es ist daher Ziel der Erfindung, einen Aktuator vorzuschlagen, der die erwähnten Nachteile nicht hat, der somit schnell, eigensicher, einfach und billig ist, der es erlaubt, mit minimaler Pumpenförderung die Kupplung eingerückt zu halten.

Erfindungsgemäß wird das dadurch erreicht, dass die selbststeuernde Ventileinheit enthält: ein Schnellablassventil, das auf den auf der ihm zugekehrten Seite der Pumpe herrschenden Druck anspricht, und ein Rückschlagventil zwischen den beiden Einheiten, das eine Strömung nur in Richtung von der Elektromotor-Pumpe-Einheit zur Zylinder-Kolben-Einheit zulässt und dass die Elektromotor-Pumpe-Einheit umsteuerbar ist, wobei sie im umgesteuerten Zustand in Gegenrichtung fördert, wodurch das Öffnen des Schnellablassventiles beschleunigt wird. Es wird also über die Steuerung des Elektromotors, die sehr schnell und exakt sein kann, die Kupplung betätigt. Die hydraulische Übertragung erfolgt über die selbststeuernde Ventileinheit, die ohne Ansteuerung von außen sicherstellt, dass die Kupplung schnell öffenbar ist und dafür sorgt, dass sie bei Ausfall der Elektrik von selbst in ihre sichere (ausgekuppelte) Stellung zurückkehrt. Denn das Ventil öffnet, wenn der Pumpendruck ganz wegfällt. Dazu weist die selbststeuernde Ventileinheit das Schnellablassventil auf, auf das nur der auf der ihm zugekehrten Seite der Pumpe herrschende Druck einwirkt, und kein Differenzdruck.

In einer praktischen Ausführung besteht das Schnellablassventil aus einer Büchse und einem darin federunterstützten Schieber, welche Büchse zumindest eine erste Öffnung hat, durch die Druckmedium aus der Zylinder-Kolben-Einheit abströmen kann, und welcher Schieber zwischen einer ersten Stellung, in der er die Öffnung freigibt und einer zweiten Stellung, in der er die Öffnung verdeckt verschiebbar ist (Anspruch 2). In einer Ausführungsform überwiegt in der ersten Stellung die Federkraft und in der zweiten die von dem Druckmedium auf den Schieber ausgeübte Kraft (Anspruch 3).

In einer vorteilhaften Ausführungsform ist der Schieber des Schnellablassventiles als Kolben ausgebildet, der in der Büchse einen ersten und einen zweiten Raum bildet, wovon der erste Raum über die Öffnung mit Zylinder-Kolben-Einheit verbindbar ist und über einen Abfluss verfügt, und wovon der zweite Raum mit der Elektromotor-Pumpe-Einheit in Verbindung steht (Anspruch 4). Die Zufuhr von Druckmedium zur Zylinder-Kolben-Einheit erfolgt somit unter Umgehung des Schnellablassventiles über das Rückschlagventil, dessen Feder entsprechend dimensioniert ist. Auf den Kolben wirkt ein statischer Druck. Dadurch kann bei ausreichender Dichtung in der Zylinder-Kolben-Einheit für einige Zeit der Druck ohne Nachlieferung von der Pumpe gehalten werden.

In einer weitergebildeten Ausführungsform ist das Rückschlagventil im Schieber enthalten, wozu der Schieber mindestens eine zweite Öffnung aufweist, die in einer Stellung des Schiebers mit der mindestens einen ersten Öffnung in Deckung ist, in der der Schieber die Verbindung zwischen der ersten Öffnung und dem Abfluss unterbindet (Anspruch 5). Dadurch wird der Raumbedarf minimiert und es ist von vorne herein sichergestellt, dass die Lieferung von Druckmedium an die Zylinder-Kolben-Einheit erst beginnt, wenn die Öffnungen für den Ablass bereits geschlossen sind.

Die Elektromotor-Pumpe-Einheit ist umsteuerbar, wodurch das Ablassen beschleunigt wird. Dabei gibt es zwei Möglichkeiten: Entweder die Feder unterstützt die Bewegung des Schiebers in die Ablass-Stellung (Anspruch 6) oder die Feder wird durch die Förderung in Gegenrichtung überwunden (Anspruch 7). In beiden Fällen erfolgt das Ablassen (=Öffnen der Kupplung) durch Umsteuerung der Pumpe sehr schnell.

Vorzugsweise ist für die Steuerung der Elektromotor-Pumpe-Einheit ein Regler vorgesehen, der als Eingangssignale einen dem Druck in der Zylinder-Kolben-Einheit entsprechenden Sollwert und einen diesem Druck entsprechenden Istwert erhält (Anspruch 8). Ein entsprechender Wert kann auch das Drehmoment, oder eine fahrdynamische Größe des Fahrzeuges sein.

Um alle Sicherheitsanforderungen bei geringstem Kraftverbrauch zu erfüllen, sind die Feder des Schnellablassventiles und die Feder des Rückschlagventiles so bemessen, dass bei steigendem Druck des Druckmediums zuerst die Abflussöffnung geschlossen wird und erst dann das Rückschlagventil öffnet (Anspruch 9). Das bedeutet auch, dass bei Druckabfall zuerst das Rückschlagventil schließt und dann erst das Schnellablassventil öffnet.

Im Folgenden wird die Erfindung anhand von Abbildungen beschrieben und erläutert. Es stellen dar:
- Fig. 1:: Ein Schema einer ersten Ausführungsform,
- Fig. 2:: eine Variante der ersten Ausführungsform,
- Fig. 3:: ein Schema einer zweiten Ausführungsform,

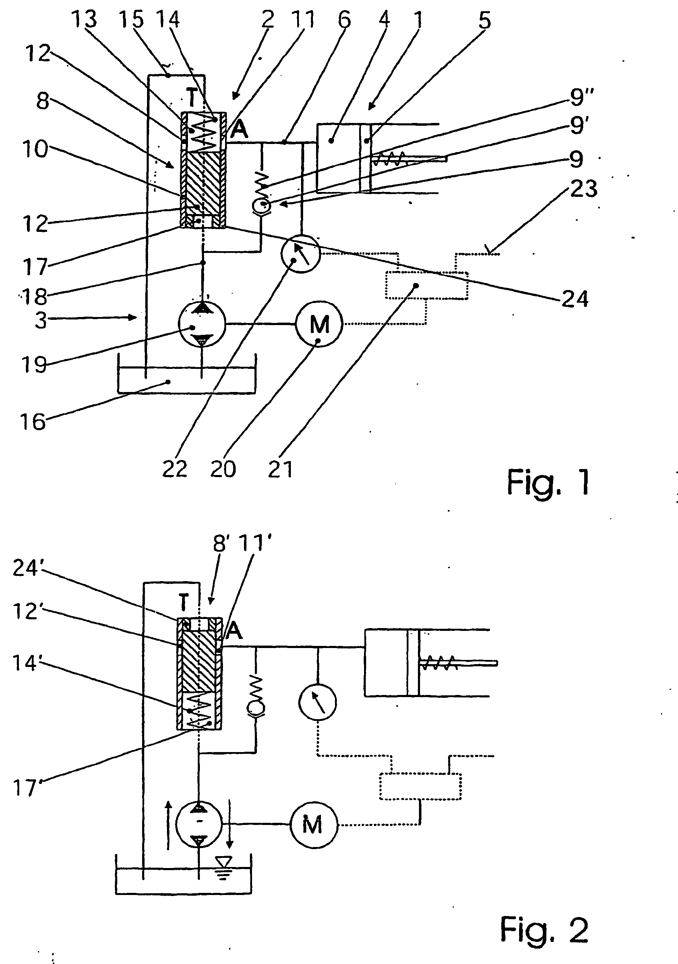

In **Fig. 1** ist summarisch eine Zylinder-Kolben-Einheit mit 1, eine Ventil-Einheit mit 2 und eine Elektromotor-Pumpe-Einheit mit 3 bezeichnet. In der Zylinder-Kolben-Einheit 1 ist ein Druckraum 4, der über eine Leitung 6 mit der Ventil-Einheit 2 in Verbindung steht, wobei das im Druckraum 4 enthaltene Druckfluid auf einen Kolben 5 wirkt. Dieser Kolben 5 ist Teil einer nicht dargestellten Reibungskupplung oder stets mit dieser direkt in Verbindung. In der Reibungskupplung wirkt die vom Kolben 5 gegen die Kraft eine nicht dargestellten Feder ausgeübte Kraft auf die Kupplungsscheiben. Bei steigendem Druck steigt das von der Kupplung übertragene bzw. ausgeübte Drehmoment.

Die Ventileinheit 2 enthält ein Schnellablassventil 8 und ein Rückschlagventil 9. Letzteres hat eine von einer Feder 9" gegen einen Sitz gedrückte Kugel 9'. Das Schnellablassventil 8 wird gebildet von einer Büchse 10 mit mindestens einer Öffnung 11, welche Öffnung über die Leitung 6 mit dem Druckraum 4 in Verbindung steht, und von einem in der Büchse 10 verschiebbaren Kolben 12. Der Kolben 12 trennt einen eine Druckfeder 14 enthaltenden ersten Raum 13 von einem zweiten Raum 17. Der erste Raum 13 steht über eine Ablassleitung 15 mit einem Sumpf 16 in Verbindung, aus dem die Elektromotor-Pumpe-Einheit 3 Fluid ansaugt bzw. in das sie Fluid fördert. An den zweiten Raum 17 ist eine Druckleitung 18 angeschlossen, die ihrerseits die Verbindung zwischen der Elektromotor-Pumpe-Einheit 3 und - über das Rückschlagventil 9 - zum Druckraum 4 herstellt.

Die Elektromotor-Pumpe-Einheit 3 besteht aus einer Pumpe für das Druckfluid und aus einem Motor 20, der von einem Regler 21 angesteuert wird. Dieser seinerseits erhält als Eingangssignal einen von einem Drucksensor 22 ermittelten Istwert und über eine Leitung 23 einen Sollwert, welche Werte jeweils dem Anpressdruck bzw. dem von der Kupplung übertragenen beziehungsweise zu übertragenden Drehmoment entsprechen.

Die Wirkungsweise der beschriebenen Anordnung ist die Folgende: In der in Fig. 1 abgebildeten Stellung fördert die Elektromotor-Pumpe-Einheit 3 entweder überhaupt nicht oder mit einem Druck, der nicht ausreicht, um das Rückschlagventil 9 zu öffnen, oder das Schnellablassventil 8 zu schließen. Im Druckraumventil 4 herrscht kein Druck, die nicht dargestellte Kupplung ist somit nicht beaufschlagt, übertragt also kein Drehmoment. Steigt nun der Druck des von der Pumpe 19 gelieferten Druckmediums in der Leitung 18, so wirkt dieser im zweiten Raum 17 auf die Unterseite des als Kolben ausgebildeten Schiebers 12 gegen die Kraft der Feder 14. Überschreitet dieser Druck einen bestimmten Wert, schließt der Schieber 12 die Öffnung 11 und damit den Abfluss aus dem Druckraum 4. Erst, wenn Öffnung 11 ganz geschlossen ist, öffnet sich das Rückschlagventil 9, Druckfluid kann in den Druckraum strömen und die Kupplung entsprechend ansteuern.

Wird die Pumpe 19 nun plötzlich angehalten, so sinkt der auf den Schieber 12 wirkende Druck, dieser wird von der Feder 14 abwärts gedrückt, wodurch die Öffnungen 11 wieder frei werden und das Druckfluid aus dem Druckraum 4 in den Sumpf 16 entweichen kann. Wird die Elektromotor-Pumpe-Einheit 3 so umgesteuert, dass sich auch der Fördersinn umkehrt, die Pumpe 19 also aus der Druckleitung 18 in den Sumpf 16 fördert, so entsteht unter dem Schieber 12 ein Unterdruck, der dessen Abwärtsbewegung erheblich beschleunigt. Dann wird bei umsteuern des Motors 20 die Kupplung augenblicklich ganz geöffnet, wie es zum Beispiel im Falle einer ABS-Bremsung gefordert ist.

Wenn der Druckraum unter Druck steht und die Elektromotor-Pumpe-Einheit 3 stillsteht, so bleibt bei guter Abdichtung der Druck noch für eine Weile erhalten. Das heißt, dass bei stationärem Betrieb mit eingerückter Kupplung die Elektromotor-Pumpe-Einheit 3 nur den Druck halten muss, damit der Schieber geschlossen bleibt. Dabei ist die Fördermenge beinahe Null, da Leckage überwiegend im Inneren der Pumpe stattfindet. Damit wird eine erhebliche Energieeinsparung erzielt.

Die Variante der **Fig. 2** unterscheidet sich von der vorhergehenden nur dadurch, dass nicht die Feder 14 gegen den von der Pumpe ausgeübten Druck wirkt, sondern die Feder 14' in derselben Richtung wirkt wie der von der Pumpe ausgeübte Druck. Ansonsten ist die Ventileinheit gleich. Hier muss die Pumpe zum Ablassen umgesteuert werden.

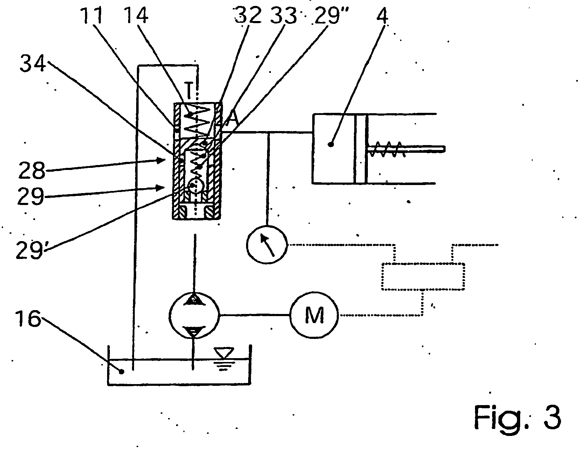

Die Ausführungsform der **Fig. 3** unterscheidet sich von der der Fig. 1 nur dadurch, dass das Rückschlagventil in das Innere des Schiebers verlegt ist. Die Büchse 10 mit Öffnung 11 ist unverändert, in ihr befindet sich der Schieber bzw. Kolben 32, in dessen Innenraum 33 das Rückschlagventil 29 eingebaut ist. Es besteht aus einer Kugel 29' und einer Feder 29". Weiters hat der Schieber 32 eine zweite Öffnung 34, die ab einem gewissen Druck des Druckmediums und einer gewissen Stellung des Schiebers 32 mit den ersten Öffnungen 11 zur Deckung kommen. Bei ansteigendem Druck des Druckfluids wird zunächst der Schieber 32 aufwärts bewegt, bis die erste Öffnung 11 abgedeckt und so der Druckraum 4 abgeschlossen ist; bei weiterem Anstieg öffnet sich das Rückschlagventil 29 und Fluid gelangt durch die mittlerweile zur Deckung gekommenen Öffnungen 11,34 in den Druckraum 4. Bei dieser Anordnung ist ohne besondere Abstimmung der Federn sichergestellt, dass zuerst der Druckraum abgeschlossen und erst dann mit Druckmedium befüllt wird.

Insgesamt wird auf die beschriebene Weise eine Steuerung von Kupplungen im Antriebsstrang eines Kraftfahrzeuges ermöglicht, die sehr kurze Schaltzeiten, die genaue Einstellung eines zu übertragenden Sperr- bzw. Kupplungsmomentes, einen geringen Energiebedarf zum Halten des eingestellten Momentes und Eigensicherheit (bei Systemausfall wird kein Drehmoment übertragen), miteinander verbinden, all das mit einer sehr einfachen und billigen Anordnung.

## Patentansprüche

1. Einfachwirkender Aktuator für die Steuerung einer Reibungskupplung im Antriebsstrang eines Kraftfahrzeuges, mit einer den Anpressdruck der Kupplung erzeugenden Zylinder-Kolben-Einheit, wobei eine steuerbare Elektromotor-Pumpe-Einheit (3) ein Druckmedium bereitstellt und über eine selbststeuernde Ventileinheit (2) mit der Zylinder-Kolben-Einheit (1) in Verbindung steht, sodass die Kupplung durch Ansteuern der Elektromotor-Pumpe-Einheit (3) gesteuert ist, **dadurch gekenntzeichnet** dass die selbststeuernde Ventileinheit (2) enthält: ein Schnellablassventil (8; 8'; 28; 38), das auf den auf der ihm zugekehrten Seite der Pumpe herrschenden Druck anspricht, und ein Rückschlagventil (9; 29) zwischen den beiden Einheiten (1,3), das eine Strömung nur in Richtung von der Elektromotor-Pumpe-Einheit (3) zur Zylinder-Kolben-Einheit (1) zulässt und dass die Elektromotor-Pumpe-Einheit (3) umsteuerbar ist, wobei sie im umgesteuerten Zustand in Gegenrichtung fördert, wodurch das Öffnen des Schnellablassventiles beschleunigt wird.

2. Aktuator nach Anspruch 1, **dadurch gekennzeichnet, dass** das Schnellablassventil (8; 8'; 28) aus einer Büchse (10; 10') und einem darin federunterstützten Schieber (12; 12'; 32) besteht, welche Büchse zumindest eine erste Öffnung (11; 11') hat, durch die Druckmedium aus der Zylinder-Kolben-Einheit (1) abströmen kann, und welcher Schieber (12; 12'; 32) zwischen einer ersten Stellung, in der er die Öffnung (11; 11') freigibt und einer zweiten Stellung, in der er die Öffnung (11; 11') verdeckt, verschiebbar ist.

3. Aktuator nach Anspruch 2, **dadurch gekennzeichnet, dass**, in der ersten Stellung des Schiebers (12; 32) die Kraft einer Feder (14; 14) und in der zweiten Stellung die von dem Druckmedium auf ihn ausgeübte Kraft überwiegt.

4. Aktuator nach Anspruch 3, **dadurch gekennzeichnet, dass** der Schieber des Schnellablassventiles (8; 28) als Kolben (12; 12'; 32) ausgebildet ist, der in der Büchse (10) einen ersten (13;13') und einen zweiten (17; 17') Raum bildet, wovon der erste Raum (13; 13') über die Öffnung (11; 11') mit der Zylinder-Kolben-Einheit (1) verbindbar ist und über einen Abfluss (15) verfügt, und wovon der zweite Raum (17) mit der Elektromotor-Pumpe-Einheit (3) in Verbindung steht.

5. Aktuator nach Anspruch 4, **dadurch gekennzeichnet, dass** das Rückschlagventil (29) im Schieber (32) enthalten ist, wozu der Schieber (32) mindestens eine zweite Öffnung (34) aufweist, die in einer Stellung des Schiebers mit der mindestens einen ersten Öffnung (11) in Deckung ist, in welcher Stellung der Schieber (32) die Verbindung zwischen der ersten Öffnung (11) und dem Abfluss (15) unterbindet (Fig. 3).

6. Aktuator nach Anspruch 2, **dadurch gekennzeichnet, dass** die Wirkung einer Feder (14) die Bewegung des Schiebers (12;32) in die erste Stellung unterstützt.

7. Aktuator nach Anspruch 2, **dadurch gekennzeichnet, dass** die Wirkung einer Feder (14') auf den Schieber (12') durch die Förderung in Gegenrichtung überwunden werden muss, um ihn in die erste Stellung zu bringen.

8. Aktuator nach Anspruch 1, **dadurch gekennzeichnet, dass** für die Steuerung der Elektromotor-Pumpe-Einheit (3) ein Regler (21) vorgesehen ist, der einen dem Druck Zylinder-Kolben-Einheit entsprechenden Sollwert und einen dem Druck Zylinder-Kolben-Einheit entsprechenden Istwert als Eingangssignale erhält.

9. Aktuator nach Anspruch 1, **dadurch gekennzeichnet, dass** eine Feder (14; 14) des Schnellablassventiles (8; 28) und eine Feder des Rückschlagventiles (9"; 29") so bemessen sind, dass bei steigendem Druck des Druckmediums zuerst die Abflussöffnung (11) geschlossen und erst dann das Rückschlagventil (9; 29) geöffnet wird.

## Claims

1. A single-acting actuator for the control of a friction clutch in the drive train of a motor vehicle having a piston in cylinder unit generating the contact pressure of the clutch, wherein a controllable electric motor and pump unit (3) provides a pressure medium and is connected to the piston in cylinder unit (1) via a self-regulating valve unit (2), so that the clutch is controlled by controlling the motor and pump unit (3), **characterized in that** the self-regulating valve unit (2) contains: a dump valve (8; 8'; 28; 38), which responds to the pressure prevailing on the side of the pump facing towards it, and a non-return valve (9; 29) between the two units (1,3), which permits a flow to take place only in the direction from the electric motor and pump unit (3) to the piston in cylinder unit (1); and **in that** the electric motor and pump unit (3) is reversible, with it pumping in the opposite direction in the reversed state, whereby the opening of the dump valve is accelerated.

2. An actuator in accordance with claim 1, **characterized in that** the dump valve (8; 8'; 28) consists of a sleeve (10; 10') and of a spring-assisted slide (12; 12'; 32) therein, said sleeve having at least one first opening (11, 11'), through which pressure medium from the piston in cylinder unit (1) can flow, and said slide (12; 12'; 32) being capable of being displaced between a first position, in which it releases the opening (11; 11'), and a second position, in which it covers the opening (11; 11').

3. An actuator in accordance with claim 2, **characterized in that** the force of a spring (14; 14') predominates in the first position of the slide (12; 32), and the force exerted by the pressure medium on it predominates in the second position.

4. An actuator in accordance with claim 3, **characterized in that** the slide of the dump valve (8; 28) is made as a piston (12; 12'; 32), which forms a first space (13; 13') and a second space (17; 17') in the sleeve (10), of which the first space (13; 13') is capable of communicating with the piston in cylinder unit (1) via the opening (11; 11') and possesses an outlet (15), and of which the second space (17) communicates with the electric motor and pump unit (3).

5. An actuator in accordance with claim 4, **characterized in that** the non-return valve (29) is contained in the slide (32), for which purpose the slide (32) has at least one second opening (34), which is in alignment with at least the one first opening (11) in one position of the slide, in which position the slide (32) obstructs the communication between the first opening (11) and the outlet (15) (Fig. 3).

6. An actuator in accordance with claim 2, **characterized in that** the effect of a spring (14) supports the movement of the slide (12; 32) into the first position.

7. An actuator in accordance with claim 2, **characterized in that** the effect of a spring (14') on the slide (12') must be overcome by the pumping in the opposite direction to bring it into the first position.

8. An actuator in accordance with claim 1, **characterized in that** a controller (21) is provided for the control of the electric motor and pump unit (3), which receives a desired value corresponding to the pressure piston and cylinder unit and an actual value corresponding to the pressure piston and cylinder unit as input signals.

9. An actuator in accordance with in claim 1, **characterized in that** a spring (14; 14') of the dump valve (8; 28) and a spring of the non-return valve (9"; 29") are dimensioned such that, as the pressure of the pressure medium rises, the outlet opening (11) is closed first, and the non-return valve (9; 29) is only opened then.

## Revendications

1. Actionneur à simple effet pour la commande d'un embrayage à friction dans le circuit d'entraînement d'un véhicule automobile, comportant une unité à piston-et-cylindre qui génère la pression d'application de l'embrayage, une unité à électromoteur-et-pompe (3) commandable fournissant un fluide sous pression et étant en communication avec l'unité à piston-et-cylindre (1) via une unité à soupape (2) à auto-commande, de telle sorte que l'embrayage est commandé par pilotage de l'unité à électromoteur-et-pompe (3), **caractérisé en ce que** l'unité à soupape (2) à auto-commande comprend : une valve d'évacuation rapide (8 ; 8' ; 28 ; 38) qui réagit à la pression régnant sur le côté de la pompe tourné vers celle-ci, et un clapet anti-retour (9 ; 29) entre les deux unités (1, 3), qui permet un écoulement uniquement dans la direction de l'unité à électromoteur-et-pompe (3) vers l'unité à piston-et-cylindre (1), et **en ce que** l'unité à électromoteur-et-pompe (3) est réversible, et dans l'état inversé, elle refoule en sens opposé, suite à quoi l'ouverture de la valve d'évacuation rapide est accélérée.

2. Actionneur selon la revendication 1, **caractérisé en ce que** la valve d'évacuation rapide (8 ; 8' ; 28) est constituée par une virole (10 ; 10') et par un tiroir (12 ; 12' ; 32) assisté par un ressort dans celle-ci, ladite virole présentant au moins une première ouverture (11 ; 11') à travers laquelle un fluide sous pression peut s'écouler hors de l'unité à piston-et-cylindre (1), et ledit tiroir (12 ; 12' ; 32) étant mobile en translation entre une première position dans laquelle il libère l'ouverture (11 ; 11') et une seconde position dans laquelle il masque l'ouverture (11 ; 11').

3. Actionneur selon la revendication 2, **caractérisé en ce que** dans la première position du tiroir (12 ; 32), c'est la force d'un ressort (14 ; 14) qui domine, et dans la seconde position, c'est la force exercée par le fluide sous pression sur celui-ci qui domine.

4. Actionneur selon la revendication 3, **caractérisé en ce que** le tiroir de la valve d'évacuation rapide (8 ; 28) est réalisé sous forme de piston (12 ; 12' ; 32) qui forme dans la virole (10) un premier compartiment (13 ; 13') et un second compartiment (17 ; 17'), dont le premier compartiment ( 13 ; 13') est susceptible d'être relié à l'unité à piston-et-cylindre (1) via l'ouverture (11 ; 11') et disposant d'une sortie (15), et dont le second compartiment (17) est en liaison avec l'unité à électromoteur-et-pompe (3).

5. Actionneur selon la revendication 4, **caractérisé en ce que** le clapet anti-retour (29) est contenu dans le tiroir (32), ce pourquoi le tiroir (32) présente au moins une seconde ouverture (34) qui, dans une position du tiroir, est en chevauchement avec ladite au moins une première ouverture (11), position dans laquelle le tiroir (32) interrompt la liaison entre la première ouverture (11) et la sortie (15) (figure 3).

6. Actionneur selon la revendication 2, **caractérisé en ce que** l'effet d'un ressort (14) vient assister le mouvement du tiroir (12 ; 32) jusque dans la première position.

7. Actionneur selon la revendication 2, **caractérisé en ce que** l'effet d'un ressort (14') sur le tiroir (12') doit être surmonté par le refoulement en sens opposé, afin de l'amener dans la première position.

8. Actionneur selon la revendication 1, **caractérisé en ce que** pour la commande de l'unité à électromoteur-et-pompe (3), il est prévu un régulateur (21) qui reçoit comme signaux d'entrée une valeur de consigne correspondant à la pression de l'unité à piston-et-cylindre et une valeur réelle correspondant à la pression de l'unité à piston-et-cylindre.

9. Actionneur selon la revendication 1, **caractérisé en ce qu'**un ressort (14 ; 14) de la valve d'évacuation rapide (8 ; 28) et un ressort du clapet anti-retour (9" ; 29") sont dimensionnés de telle sorte que lors d'une augmentation de la pression du fluide sous pression, c'est tout d'abord l'ouverture d'évacuation (11) qui est fermée et ce n'est qu'ensuite que le clapet anti-retour (9 ; 29) est ouvert.
